# EUROPÄISCHE PATENTANMELDUNG

(11) **EP 0 987 308 A2**
(43) Veröffentlichungstag der Anmeldung: **22.03.2000**
(21) Anmeldenummer: 99116889.9
(22) Anmeldetag: 06.09.1999
(51) Int. Cl.: C09J 7/00

(54) **Klebfolienstreifen**

(30) Priorität: 19.09.1998 DE 19842864
(71) Anmelder: Beiersdorf Aktiengesellschaft, 20245 Hamburg (DE)
(72) Erfinder: Lühmann, Bernd, Dr., 22846 Norderstedt (DE); Krawinkel, Thorsten, Dr., 22457 Hamburg (DE)

(57) **Zusammenfassung**

Klebfolienstreifen für eine wieder lösbare Verklebung, der sich durch Ziehen in Richtung der Verklebungsebene aus einer Klebfuge herauslösen läßt, mit einem nichtklebenden Anfasser und einem sich daran anschließenden länglichen, ein- oder beidseitig klebenden Streifen, dadurch gekennzeichnet, daß der Streifen eine Breite von 2 -6 mm und ein Verhältnis von Breite zu Dicke von kleiner oder gleich 10:1 aufweist.

## Beschreibung

Die Erfindung betrifft einen Klebfolienstreifen für eine wiederablösbare Verklebung, der sich durch Ziehen in Richtung der Verklebungsebene aus einer Klebfuge herauslösen läßt.

Eine häufige Anwendung transparenter Selbstklebefilme ist die temporäre Befestigung sehr leichter, zumeist flacher Gegenstände, wie z. B. sehr kleiner Bilder, Postkarten, Poster, Zeichnungen, Dekorationen etc. im Wohn- und Bürobereich. Selbstklebefilme werden hierbei oft alternativ zu Nadeln, Reißzwecken und Pin-Nadeln eingesetzt. Vorteile von Selbstklebebändern im Vergleich zu letztgenannten Befestigungsmitteln sind u. a. ihre ungefährliche Handhabung (keine Verletzungsgefahr), ihre weitestgehende Unsichtbarkeit (durch die hohe Transparenz der Selbstklebefilme), die Möglichkeit eine Fixierung auch auf festen mit Nadeln nicht zu durchstechenden Oberflächen vorzunehmen sowie die Möglichkeit eine einmal vorgenommene Verklebung von ausreichend festen Untergründen durch Abschälen des Klebefilmes rückstands- und zerstörungsfrei wieder ablösen zu können. Nachteilig ist, daß sich die Klebefilme von wenig festen Haftgründen, wie z. B. Tapeten, Papier, Pappe, gestrichenen Wänden etc. häufig nicht ohne Zerstörung des Haftgrundes wiederablösen lassen. Derartige Klebefilme sind als tesa-film® oder Scotch tape® im Handel.

Elastisch oder plastisch hochdehnbare Selbstklebebänder, welche sich durch Verstrecken im wesentlichen in der Verklebungsebene (durch sogenanntes Strippen) auch von z. T. sehr empfindlichen Verklebungsuntergründen, wie z. B. Papieren oder gestrichener Rauhfasertapete, rückstands- und zerstörungsfrei wiederablösen lassen, sind in US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729 und DE 197 08 366 beschrieben. Eingesetzt werden sie häufig in Form von Klebebandstreifen, welche einen bevorzugt nicht haftklebrigen Anfasserbereich aufweisen, von welchem aus der Ablöseprozeß eingeleitet wird. Besondere Applikationen und Ausführungsformen entsprechender Selbstklebebänder finden sich u. a. in DE 42 33 872, WO 94/21157, DE 44 28 587, DE 44 31 914, WO 97/07172, DE 196 49 636 und WO 98/03601. Die in vorgenannten Patentschriften beschriebenen Produkte sind jedoch durchweg auch für die Verklebung mittelschwerer bis schwerer Gegenstände konzipiert, so daß sie hohe Verklebungsfestigkeiten aufweisen müssen. Ein sehr großer Teil der im Wohn- und Bürobereich gewünschten Fixierungen betrifft jedoch, wie zuvor beschrieben, kleine und kleinste Gegenstände, wie etwa die Befestigung sehr kleiner Bilder, Postkarten, Photos, Zeichnungen sowie typischerweise an Pinnwänden fixierte Gegenstände, für deren Befestigung klassischerweise häufig einfache Selbstklebefilme, Stecknadeln, Pin-Nadeln und Heftzwecken ausreichend sind. Für vorgenannte Anwendungen sind die bislang marktgängigen und in o. g. Patentschriften beschriebenen, durch Verstrecken in der Verklebungsebene wiederablösbaren Selbstklebebänder, somit wenig geeignet, u. a. durch ihre inkonveniente Handhabung als auch durch sehr hohe Kosten pro Anwendung, was ihrer Massenanwendung deutlich entgegensteht. So zeigt sich in der Praxis, daß insbesondere für die Fixierung kleiner Gegenstände Klebebänder vorteilhaft sind, welche sehr niedrige Stripkräfte aufweisen, um ein leichtes und einfaches Ablösen, - z. B. auch für Kinderhände -, zu erlauben und welche zusätzlich in ihrer Form und Größe den zu verklebenden Gegenständen angepaßt sind.

Aufgabe vorliegender Erfindung war es somit Klebfolienstreifen zur Verfügung zu stellen, welche für die Verklebung kleiner Gegenstände geeignet sind und dabei insbesondere derart ausgestaltet sind, daß sie beim Ablöseprozeß nicht zum Reißen neigen, zugleich aber auch das Strippen erleichtern, insbesondere für weniger starke Personen, wie Frauen, Kinder und ältere Leute.

Eine Möglichkeit zu leichter stripfähigen (niedrigere Stripkräfte) und auch preiswerteren Selbstklebebändern bzw. Klebebandstreifen zu gelangen besteht darin, ihre Dicke zu reduzieren. Wie in der DE 33 31 016 C2 (S. 2, Z. 50 ff.) aufgezeigt, hat die Klebebanddicke der hierin beschriebenen Klebebandstreifen für den Ablöseprozeß (Ablösen durch Verstrecken in der Verklebungsebene) eine entscheidende Bedeutung. Die zum Ablösen benötigte Abzugskraft setzt sich aus der Kraft zusammen, welche für das Abschälen des Klebebandes von den Verklebungsuntergründen nötig ist und der Kraft, welche zur Verformung des Klebebandes aufgewendet werden muß. Letztere ist annähernd der Dicke des Klebebandes proportional, erstere kann im betrachteten Dickenbereich vereinfacht als konstant angenommen werden. Die Reißfestigkeit eines entsprechenden Klebebandes steigt auf der anderen Seite direkt proportional zu seiner Dicke an. Hieraus folgt, daß für Selbstklebebänder entsprechend DE 33 31 016 C2 die Reißfestigkeit unterhalb einer bestimmten Dicke kleiner als die Abzugskraft wird, mithin entsprechend dünne Produkte nicht mehr durch Verstrecken in der Verklebungsebene von den Haftgründen lösbar sind, vielmehr zerreißen diese bei einem entsprechenden Versuch. Die in der DE 33 31 016 C2 beschriebene Problematik ist sinngemäß auf stripfähige Selbstklebebänder anderer Produktaufbauten, z. B. mehrschichtige Systeme, übertragbar.

Eine zweite Möglichkeit durch einfache Größenvariation zu preiswerteren Selbstklebebändern bzw. Selbstklebebandstreifen mit gleichzeitig niedrigen Stripkräften zu gelangen besteht darin selektiv die Klebebandbreite zu reduzieren. Überraschenderweise beobachtet man bei Klebebändern von sehr niedriger Breite, daß Reißer oder Untergrundschädigungen beim Ablöseprozeß, welche z. B. gern zum Ende des Ablösevorganges - also beim Ablösen der letzten mm des jeweiligen Klebfolienstreifens - auftreten, in der praktischen Anwendung im Vergleich zu den analogen breiteren Klebfolienstreifen nicht oder doch signifikant vermindert in Erscheinung treten. Dies gilt insbesondere auch dann, wenn die verwendeten Klebestreifen nicht entsprechend DE 44 28 587 ausgeformt sind. Vorgenannte Eigenschaft ist insbesondere dann von großem Vorteil, wenn Klebebänder mit sehr weichen und damit zumeist stark haftklebrigen (stark tackigen) Haftklebemassen und // oder Selbstklebebänder mit nur geringer Verstreckbarkeit genutzt werden sollen, da in beiden Fällen erfahrungsgemäß eine besonders ausgeprägte Tendenz zu starken Stripkraftanstiegen zum Ende des Ablöseprozesses auftritt. Klebfolienstreifen mit hoher Haftklebrigkeit bieten den Vorteil, daß hohe Verklebungsfestigkeiten bereits bei geringen Anpreßdrucken realisiert werden. Hohe Stripdehnungen werden infolge der sehr großen Längen, die ein Strip zum Ablöseprozeß gedehnt werden muß, in der Praxis häufig als unvorteilhaft empfunden. Zusätzlich kann der abzulösende Klebestreifen leicht im gedehnten Zustand auf einer der Substratoberfläche verkleben, wenn der Klebestreifen infolge seiner sehr großen Länge im verstreckten Zustand nicht kontinuierlich in einem Stück abgelöst werden kann, der Ablöseprozeß somit unterbrochen wird. Entsprechend unter Spannung verklebte Klebestreifen reißen aber besonders leicht beim Versuch, sie endgültig aus der Klebfuge herauszuziehen.

Eine Ursache für die merklich geringere Tendenz zu Reißern und Untergrundschädigungen bei der Verwendung der erfindungsgemäßen Klebfolien sehr schmaler Klebebandstreifen scheint in der Tatsache begründet sein, daß durch die hierdurch bedingten sehr niedrigen Stripkräfte in der praktischen Anwendung merklich höhere Separationsgeschwindigkeiten im Vergleich zu ihren bisherigen (breiteren) Analoga vom Anwender eingesetzt werden. Das schnellere Herausziehen der Klebebandstreifen aus der Klebfuge durch den Anwender im Vergleich zu den analogen breiteren Klebebandstreifen bedingt dabei konsequenterweise eine stärkere Verstreckung derselben beim Ablöseprozeß. Letzteres bewirkt eine stärkere Reduzierung der Haftklebrigkeit der Klebestreifen beim Herauslösen aus der Klebfuge, nach DE 33 31 016 C2, Zeile 25 eine wesentliche Voraussetzung für einen reißerfreien Ablöseprozeß über die gesamte Länge des abzulösenden Klebebandes. Die reduzierte Reißerneigung im Endbereich erfindungsgemäßer schmaler stripfähiger Klebfolienstreifen ist um so erstaunlicher, weil bei den in der Praxis auftretenden höheren Separationsgeschwindigkeiten das Verhältnis von Reißkraft zu Stripkraft (der sogenannte Sicherheitsfaktor gegen Reißen) infolge der mit der Ablösegeschwindigkeit ansteigenden Stripkraft (die Höchstzugkräfte sind im betrachteten Ablösegeschwindigkeitsbereich etwa konstant) merklich kleiner wird.

Eine weitere mögliche Erklärung für die signifikant geringere Anzahl von Reißern bei sehr schmalen Klebestreifen ist die, daß physikalische Effekte, welche sich beim Abstrippen in den beiden Randbereichen der Klebestreifen abspielen, gegenüber solchen im Mittelbereich der Klebestreifen dominant werden, in jedem Fall jedoch an Bedeutung gewinnen. So tritt beim Ablösen eines Klebestreifens (beim Strippen) von den Verklebungsuntergründen eine deutliche Reduktion von Breite und Dicke des Klebestreifens auf, welches z. B. im Falle von Klebebändern entsprechend DE 33 31 016 oder DE 197 08 366 über deren kautschukelastisches Verhalten beschrieben werden kann. Entsprechend des kautschukelastischen Charakters vorgenannter Klebestreifen bewirken die auftretenden Ablösekräfte Deformationen der Klebestreifen im Bereich in dem sich diese von den Haftgründen ablösen sowie ebenfalls im daran anschließenden noch verklebten Bereich der. Deformationen werden in beiden Bereichen in den Randzonen der Klebestreifen merklich anders ausfallen als im Mittelbereich der Klebestreifen, welches einen signifikanten Einfluß auf die Reißerneigung beim Ablöseprozeß haben kann.

Erfindungsgemäße Selbstklebebänder können von ein- oder mehrschichtigem Aufbau sein. Prinzipiell geeignet sind einschichtige Klebebänder entsprechend DE 33 31 016 und DE 42 22 849 oder mehrschichtige Klebebänder bestehend aus einer oder aus mehreren Klebstoffschichten sowie aus einer oder aus mehreren folien-oder schaumstoffhaltigen Schichten entsprechend US 4,024,312, DE 195 31 696, DE 196 26 870, DE 197 08 366, DE 196 49 727, DE 196 49 728, DE 196 49 729 oder auch solche entsprechend WO 92/11332, WO 92/1333 und WO 95/06691. Schaumstoffzwischenträger können u. a. vorteilhaft dann Teil erfindungsgemäßer Klebfolienstreifen sein, wenn z. B. Klebfolienstreifen mit höherer Biegesteifigkeit eingesetzt werden sollen. Erfindungsgemäß einsetzbar sind sowohl einseitig, als auch beidseitig haftklebrige Klebfolien.

Erfindungsgemäße Klebfolienstreifen von rechteckiger Form liegen in ihrer Breite bevorzugt zwischen ca. 2 mm und ca. 6 mm, besonders bevorzugt zwischen 2,5 mm und 4,5 mm. Die genannten Untergrenzen sind primär durch die praktische Handhabung entsprechender Klebestreifen durch den Anwender gegeben. Klebestreifen weisen ein Breiten- zu Dickenverhältnis von ≤ 10:1, bevorzugt von ≤ 7:1, besonders bevorzugt von ≤ 5:1 auf, insbesondere bis einer Untergrenze von 1 : 1. Typische Klebstreifenlängen betragen zwischen ca. 20 mm und 100 mm, bevorzugt zwischen ca. 25 mm und 50 mm. Klebestreifen können im Endbereich optional entsprechend DE 44 28 587 ausgeformt sein, z.B. spitz zulaufen. Klebestreifen weisen typische Dicken zwischen ca. 300 µm und ca. 2500 µm, bevorzugt zwischen 400 µm und 1500 µm, besonders bevorzugt zwischen 500 µm und 1200µm auf. Enthalten die Klebestreifen einen oder mehrere schaumstoffhaltige Schichten, so betragen typische Klebestreifendicken ca. 300 µm bis ca. 5000 µm, bevorzugt 400 µm bis 3000 µm, besonders bevorzugt 500 µm bis 2000 µm.

Typische Anwendungen der erfindungsgemäßen Klebefolienstreifen sind die Fixierung kleiner und leichter Gegenstände, wie z. B. kleiner Bilder, Postkarten, Poster, Dekorationen etc. im Wohn- und Bürobereich. Insbesondere eignen sich entsprechende Klebestreifen auch für die Fixierung typischerweise an Pinnwänden befestigter Gegenstände. In einer speziellen Ausführung werden die nicht haftklebrigen Anfasserbereiche entsprechender Klebestreifen durch farbige Bedruckung oder Beschichtung mittels farbiger Folien oder Papiere erzeugt. Vorteil ist hierbei, daß durch die farbige Ausgestaltung der recht kleinen Anfasserbereiche die Anfasser selbst gut sichtbar bleiben. Ein weiterer Vorteil ist ein attraktiveres Erscheinungsbild entsprechender Klebestreifen. Besonders bevorzugt sind Bedruckungen oder Beschichtungen mittels farbiger Folien oder Papiere, welche Farbstoffe auf Basis fluoreszierender Pigmente also sogenannter Leuchtfarben nutzen.

Typische Darreichungsformen umfassen einseitig mit einem Trennlaminat (typischerweise Trennpapier oder Trennfolie) abgedeckte Klebebandstreifenstanzlinge, welche mit ihrer zweiten haftklebrigen Seite ähnlich etwa haftklebrigen Etiketten auf Trennpapier- bzw. Trennfolienrollenware vorliegen und z. B. einer Schachtelverpackung mit Schlitz und optional vorhandener Abreißvorrichtung entnommen werden können, oder auch solche, welche auf Trennpapier- bzw. Trennfolienblattware vorliegen. Eine bevorzugte Verpackung ist die eines Heftchens, welches mehrere Trennpapier- bzw. Trennfolienblätter enthält, die mit erfindungsgemäßen Klebestreifen bestückt sind. Weitere Möglichkeiten umfassen u. a. Schachteln oder Dosen, welche beidseitig mit einem Trennpapier oder einer Trennfolie abgedeckte Klebebandstreifen enthalten. Vorgenannte Beschreibungen verstehen sich als beispielhaft aus einer großen Menge möglicher Darreichungsformen herausgegriffen.

### Beispiele

### Beispiel I

40 Telle eines polyisoprenmodifizierten Styrol-Ethylen/Butylen-Styrol Blockcopolymers (Kraton G RP 6919; Shell), 10 Teile eines Styrol-Ethylen/Butylen-Styrol Blockcopolymers (Kraton G 1650; Shell), 50 Tle eines hydrierten Kohlenwasserstoffharzes (Regalite R 101; Hercules) und 1 Tl. eines primären Antioxidantes (Irganox 1010; Ciba) werden in einem Kneter mit Sigma-Schaufel bei einer Temperatur von +180°C zu einer homogenen Mischung verarbeitet. Nach dem Erkalten werden durch Verpressen der Klebmasse bei +200°C einschichtige Klebstoff-Folienstücke von 800 ± 60 µm Dicke hergestellt.

Mittels einer Stanze werden aus den Klebstoff-Folienstücken rechteckige Klebestreifen der Abmessungen 40 mm x 50 mm, 20 mm x 50 mm, 10 mm x 50 mm, 5 mm x 50 mm und 3,5 mm x 50 mm (jeweils Breite x Länge) erhalten, welche an einem Längsende beidseitig mit einem Anfasser bestehend aus 12 mm langen und 25µm dicken, der Breite der Klebestreifen angepaßten Polyesterfolien (Hostaphan RN 25) abgedeckt werden. Ein Teil der 5 mm x 50 mm (Breite x Länge) messenden Klebstoff-Folienstücke wird durch Herausschneiden eines rechtwickligen dreieckigen Stückes mit 5 mm Kantenlänge (der beiden Katheten) an ihrem Ende spitz ausgeformt. Mit je einem Klebestreifen werden je zwei rechteckige Glasplatten der Abmessungen 100 mm x 50 mm an einer ihrer kurzen Seiten mittig derart deckungsgleich verklebt, daß der nicht haftklebrige Anfasserbereich etwa 10 mm aus der Klebfuge hervorsteht. Die Klebestreifen werden anschließend von unterschiedlichen Personen durch Verstrecken in der Verklebungsebene manuell aus der Klebfuge herausgelöst. Hierbei zeigt sich, daß schmalere Klebestreifen deutlich schneller von den entsprechenden Versuchspersonen aus der Klebfuge herausgelöst werden. Je Klebestreifen wurden 10 Versuche durchgeführt. Stripkräfte wurden mittels einer Federwaage ermittelt. Es ergeben sich nachfolgende Versuchsergebnisse:

| Versuch | Klebestreifenbreite // b/d* | Klebestreifenende | Anzahl Reißer | Ablösegeschwindigkeit; subjektiv |
|---|---|---|---|---|
| 1-01 | 40 mm // 50 | glatt | 7 von 10 | niedrig |
| 1-02 | 20 mm // 25 | glatt | 4 von 10 | mäßig |
| 1-03 | 10 mm // 12,5 | glatt | 1 von 10 | mäßig / schnell |
| 1-04 | 5 mm // 6,25 | glatt | keine Reißer | schnell |
| 1-04a | 5 mm // 6,25 | spitz ausgeformt | keine Reißer | schnell |
| 1-05 | 3 mm // 3,75 | glatt | keine Reißer | schnell |

| | | | | |
|---|---|---|---|---|
| *b/d = Verhältnis von Breite zu Dicke der Klebestreifen | | | | |

| Versuch | Höchstzugkraft | Stripkraft | Sicherheitsfaktor |
|---|---|---|---|
| 1-01 | 275 N / Klebestreifen | 35 N / Klebestreifen | 7,9 |
| 1-02 | 145 N / Klebestreifen | 19 N / Klebestreifen | 7,6 |
| 1-03 | 75 N / Klebestreifen | 11 N / Klebestreifen | 6,7 |
| 1-04 | 40 N / Klebestreifen | 6,5 N / Klebestreifen | 6,1 |
| 1-04a | 40 N / Klebestreifen | 6,5 N / Klebestreifen | 6,1 |
| 1-05 | 25 N / Klebestreifen | nicht bestimmt | - |

Trotz höherer Ablösegeschwindigkeit und damit niedrigerem Verhältnis von Höchstzugkraft zu Ablösekraft (Stripkraft) und hieraus resultierendem niedrigeren Sicherheitsfaktor gegen Reißer wird in der praktischen Anwendung der Klebebandstreifen eine signifikante Reduzierung der Anzahl der Reißer beim Ablöseprozess beobachtet. Muster aus Versuch 1-04a zeigen zum Ende des Stripprozesses im sich verjüngenden Bereich ein besonders leichtes und damit angenehmes Ablösen. Selbst bei extrem niedrigen Ablösegeschwindigkeiten treten bei Mustern entsprechend Versuch 1-04a in keinem Fall Reißer im Endbereich der Haftklebestreifen auf.

### Beispiel II

Bei Klebestreifen entsprechend Versuch 1-04 (Gesamtlänge jedoch 35 mm) werden die Polyesterfolienanfasser durch kreisrunde farbige Papieranfasser vom Durchmesser 6 mm ersetzt. Entsprechende Klebestreifen eignen sich insbesondere für die Verklebung kleiner und sehr leichter flacher Gegenstände, z. B. an Pinnwänden. Durch die farbige Ausgestaltung der Anfasserbereiche läßt sich deren Position sehr schnell erkennen und somit leicht wiederfinden. Insbesondere geeignet sind für ein schnelles Erkennen in vorliegendem Fall Anfasserpapiere, welche mittels fluoreszierender Leuchtfarben bedruckt sind.

### Beispiel III

Entsprechend Bspl. I werden 800 µm dicke rechteckige Klebstoft-Folienstücke unterschiedlicher Breite untersucht, welche einen zweischichtigen Produktaufbau besitzen. Schicht 1 besteht aus einer ca. 400 µm starken Haftklebmasse auf Basis von 50 Tln. Vector 4113 (Styrol-Isopren-Styrol Dreiblockcopolymer mit ca. 15 % Styrol-Isopren Zweiblockgehalt der Fa. Dexco), 50 Tln. Foralyn 110 (Pentaester von teilhydriertem Balsamkolophonium; Fa. Hercules) und 1 Tl. Irganox 1010 (phenolisches Antioxidant; Fa. Ciba). Schicht 2 besteht aus einer ebenfalls ca. 400 µm starken Schicht auf Basis von 20 Tln. Vector 8508 (Styrol-Butadien-Styrol Dreiblockcopolymer; Fa. Dexco), 30 Tln. Vector 4211 (Styrol-Isopren-Styrol Dreiblockcopolymer; Fa. Dexco), 50 Tln. Foralyn 110 und 1 Tl. Irganox 1010. Es ergeben sich nachfolgende Eigenschaften.

| Versuch | Klebestreifenbreite // b/d* | Klebestreifenende | Anzahl Reißer | Abläsegeschwindigkeit; subjektiv |
|---|---|---|---|---|
| 3-01 | 30 mm // 37,5 | glatt | 8 von 10 | niedrig |
| 3-02 | 3 mm // 3,75 | glatt | 0 von 10 | schnell |

| | | | | |
|---|---|---|---|---|
| *b/d = Verhältnis von Breite zu Dicke der Klebestreifen | | | | |

## Patentansprüche

1. Klebfolienstreifen für eine wiederlösbare Verklebung, der sich durch Ziehen in Richtung der Verklebungsebene aus einer Klebfuge herauslösen läßt, mit einem nichtklebenden Anfasser und einem sich daran anschließenden länglichen, ein- oder beidseitig klebenden Streifen, dadurch gekennzeichnet, daß der Streifen eine Breite von 2 - 6 mm und ein Verhältnis von Breite zu Dicke von kleiner oder gleich 10:1 aufweist.

2. Klebfolienstreifen nach Anspruch 1, dadurch gekennzeichnet, daß der Streifen eine Dicke von 300 bis 5000 µm, insbesondere 400 bis 3000 µm aufweist.

3. Klebfolienstreifen nach Anspruch 1, dadurch gekennzeichnet, daß der Streifen eine Breite von 2,5 bis 4,5 mm und ein Verhältnis von Breite zu Dicke von kleiner oder gleich 7:1 aufweist.

4. Klebfolienstreifen nach Anspruch 1, dadurch gekennzeichnet, daß der Streifen eine Breite von 2,5 bis 4,5 mm und ein Verhältnis von Breite zu Dicke von kleiner oder gleich 5:1 aufweist.

5. Klebfolienstreifen nach Anspruch 1, dadurch gekennzeichnet, daß der Streifen eine oder mehrere schaumstoffhaltige Schichten enthält.

6. Klebfolienstreifen nach Anspruch 1, dadurch gekennzeichnet, daß der Anfasser farbig ausgestaltet ist.

7. Klebfolienstreifen nach Anspruch 1, dadurch gekennzeichnete, daß die Verklebungsfläche abnimmt, indem das Streifenende spitz gezackt, konvex gekrümmt oder wellenförmig begrenzt ausläuft, oder zum Streifenende hin zunehmend die Klebfolienoberfläche mittels einer Abdeckung oder eines Aufdrucks inertisiert ist.

8. Klebfolienstreifen nach Anspruch 1, dadurch gekennzeichnet, daß der Klebfolienstreifen ein solcher auf Basis von thermoplastischem Kautschuk und klebrigmachenden Harzen ist, wobei die Klebefolie hohe Elastizität und geringe Plastizität aufweist und wobei die Adhäsion geringer als die Kohäsion ist, das Haftvermögen beim Dehnen der Folie weitgehend verschwindet und das Verhältnis von Abzugskraft zu Reißlast mindestens 1 : 1,5 ist, wobei die Masse selbstklebend oder wärmeaktivierbar eingestellt ist.

9. Klebfolienstreifen nach Anspruch 1, dadurch gekennzeichnet, daß das Ende, welches als Anfasser zum Ziehen dient, mit einer Abdeckung versehen ist, die insbesondere UV-undurchlässig ist.

10. Klebfolienstreifen nach Anspruch 7, dadurch gekennzeichnet, daß die Abdeckung eine dimensionsstabile und insbesondere beidseitig auf die Klebfolie auf-kaschierte Kunststoff-Folie ist.

11. Klebfolienstreifen nach Anspruch 1, dadurch gekennzeichnet, daß der Klebfolienstreifen ein solcher mit einer hochdehnbaren, praktisch nicht rückstellenden Trägerfolie und einer druckempfindlichen Selbstklebemasse auf beiden Seiten der Trägerfolie ist, wobei die Trägerfolie eine genügend hohe Bruchdehnung (tensile strenght at break) hat, so daß sie nicht reißt, bevor der Klebfolienstreifen vom Substrat abgezogen ist.
